# EUROPEAN PATENT SPECIFICATION

(11) **EP 2 627 901 B1**
(45) Date of publication and mention of the grant of the patent: **29.06.2016**
(21) Application number: 11801865.4
(22) Date of filing: 09.12.2011
(51) Int. Cl.: F03D 80/00

(54) **WIND TURBINE**
WINDENERGIEANLAGE
ÉOLIENNE

(43) Date of publication of application: 21.08.2013
(73) Proprietor: Mitsubishi Heavy Industries, Ltd., Tokyo 108-8215 (JP); Euros Entwicklungsgesellschaft für Windkraftanlagen mbH, 13088 Berlin (DE)
(72) Inventor: SHIBATA, Masaki, Tokyo 1088215 (JP); ICHINOSE, Hidekazu, Tokyo 1088215 (JP); ALWART, Jens, 13088 Berlin (DE); CREMER, Andreas, London, W1K 6WL (GB)
(74) Representative: RGTH
(86) International application number: PCT/JP2011/006905
(87) International publication number: WO 2013/084276

(56) References cited:
- EP-A2- 2 131 037
- WO-A2-2011/009459
- US-A1- 2006 018 752
- US-A1- 2011 090 110
- US-A1- 2011 138 937

## Description

### [Technical Field]

The invention relates to a wind turbine comprising monitoring means, a condition monitoring system and a method for monitoring the surface condition of a wind turbine blade.

### [Background Art]

Monitoring the surface condition of wind turbine blades, with wind turbine blades being one of the most highly stressed components of wind turbines, has become even more significant since the trend in wind turbine development in recent years has evolved towards an increased size of wind turbine components. Due to this development, the components of wind turbines are designed closer to the material limit and therefore more prone to a reduction of fatigue strength and material damages due to the high amount of stress and strain acting on them. Noticing material damage as soon as possible is extremely crucial to avoid further damages since intervention in the early stages of deterioration is usually much more cost effective than allowing the component to fail completely. Usually, monitoring systems allowing a remote control compared to sending staff to the wind turbine are the most efficient and for off-shore wind turbines also the only way for monitoring the surface condition of the blades.

Monitoring means known in the prior art for monitoring the surface condition of wind turbine blades are usually positioned on the nacelle. US 2010/0135788 A1 discloses such monitoring means in form of video cameras which are mounted on the nacelle or at ground level. However, such monitoring means are only able to monitor the blade surface condition in a very restricted area of the blade. Even though monitoring means mounted on the nacelle will be able to monitor surface damages of the root portion of the blade, they will not be able to monitor the surface condition of e.g. the tip portion of the blade.
US 2011/0090110 A1 discloses a wind turbine blade inspection system including a frequency modulated continuous wave radar system configured to be movable with respect to a wind turbine blade while transmitting reference microwave signals and receiving reflected microwave signals.
In US 2011/0138937 A1 a system and a method for inspecting a wind turbine for indications is disclosed which comprises an inspection system on a tower of the wind turbine including a climbing device and an inspection device.
WO 2011/009459 A2 discloses a device for detecting surface conditions on the surface of an airfoil, wherein the device includes at least one sensor device comprising at least one radiation emitter adapted to emit radiation directed towards at least one surface of said airfoil.
EP 2 131 037 A2 describes a method for monitoring the operation of a wind turbine comprising an acoustic sensor.
In US 2006/0018752 A1 a method for deicing a rotor blade is disclosed which includes circulating heated air.

### [Summary of Invention]

It is the object of the invention to provide a wind turbine in such a way that an enhanced monitoring of the wind turbine blades is achieved. A further object of the present invention is to provide an improved condition monitoring system adapted to process the monitoring data of the monitoring means. An even further object of the invention is to provide a method for monitoring the blade surface condition of a wind turbine.

According to the present invention, the wind turbine comprises a tower, a nacelle and at least one blade with a tip end and a root end. Preferably, the wind turbine comprises a plurality of blades. The blades of the wind turbine are mounted on a hub which is coupled to the nacelle. The nacelle is arranged atop of the tower and rotatable around the longitudinal axis of the tower so that the blades can be positioned with respect to the direction of the wind. The wind turbine further comprises a blade pitch control for rotating the at least one blade around its longitudinal axis,
wherein the blade pitch control is adapted to rotate the at least one blade for monitoring substantially the entire blade surface condition in the circumferential direction of the blade. The blade is adapted to be aligned along the longitudinal direction of the tower, while the monitoring means is adapted to be moved along the tower to monitor the blade surface condition of at least substantially one entire side of the blade from its tip end to its root end and adapted to be moved around the tower along its circumferential direction according to the position of the blade.

In accordance with the present invention, the wind turbine further comprises monitoring means which is located at the tower or the nacelle, in particular at the outside of the tower or the nacelle. Preferably, the monitoring means is arranged at a distance from the blade. The monitoring means is preferably permanently installed at the wind turbine and is especially suited to be used for monitoring the blade surface condition at any time, including during operation of the wind turbine. The monitoring means is not installed only and specifically for maintenance but is installed and adapted to monitor the blade surface condition outside of the usual maintenance times of the wind turbine, i.e. during its operation.

The monitoring means is adapted to monitor the surface condition of at least substantially one entire side of the blade from its tip end to its root end. In this way, the surface condition of one side of the blade along substantially its complete length can be monitored. The term "side of the blade" can be understood as the leading edge, the trailing edge, the suction side or the pressure side of the blade. Particularly, at least 80 percent, preferably 90 percent, of the surface condition of one entire blade side can be monitored. In a particularly preferred embodiment, the surface condition of the entire length of at least one side of the blade can be monitored from its tip end to its root end.

The term "surface condition of the blade" relates to any damages of the surface. These could be damages due to lightning, hail or any other environmental condition as well as corrosion damage, coating damage or structural damage, such as cracks or holes. In addition to damages, "surface condition" could also be any other environmental condition, such as e.g. the icing condition of the blade.

By the term "monitoring" observation from a distance is meant which can include recording monitoring data and sending it to a processing system. In this way, the monitoring means enables a user to inspect the surface condition of the blade remotely without the need to evaluate the surface in person which would be time consuming and ineffective.

In particular, monitoring means can comprise optical recording means, such as photo or video cameras. In the case of cameras, the monitoring of the surface condition is done optically by taking images or videos of the blade surface. Preferably, the monitoring means comprises illumination means, such as e.g. a flashlight, for the illumination of the blade surface which are in particular arranged together with the optical recording means in such a way that a better quality of the optical monitoring data can be achieved. The monitoring data in the form of videos or images can be sent to a system for processing the data, preferably a condition monitoring system. The monitoring means can preferably also be adapted to process the data before sending it to a condition monitoring system.

In a further embodiment, the optical recording means comprise at least one wide-angle lens to monitor a greater range of optical information. Preferably, the optical recording means are shielded from rain by a water-proof housing. In a further embodiment, the optical recording means comprise cleaning means, such as e.g. a wiper mechanism, in order to remove any kind of dirt, dust, salts or crystals from the monitoring means.

Monitoring means can also comprise at least one means for transmitting and receiving acoustic waves, such as an acoustic sensor, preferably for ultrasound. The acoustic sensor comprises a transmitter and a sender. By using an acoustic sensor for ultrasound, monitoring the surface condition is done by emitting ultrasound onto the blade surface, therefore exciting oscillations in the blade material for a certain period of time and measuring the return acoustic sound waves. In this case, monitoring data would comprise the received acoustic waves or information about them. In general, it is preferable that any settings of the monitoring means can be controlled remotely. Monitoring means can also refer to any other evaluation means, such as e.g. mircophones, shearography testing means, thermography testing means, x-ray testing means, infrared or any other kind of sensors.

In a further embodiment of the invention, the monitoring means comprises at least one camera and/or at least one acoustic sensor.

Preferably, the monitoring means is arranged in a swivel-mounted or rotatable way so that each monitoring means covers a larger part of the blade surface for monitoring.

Monitoring is usually carried out at times with low wind forces. Then the rotation of the blades is stopped and the blade to be monitored is preferably aligned parallel to the longitudinal axis of the tower. Therefore, preferably one certain rotational position of the nacelle and hence the blade is set as a monitoring position of the blade for monitoring their surface condition. In this case, the monitoring means can be arranged along the tower facing the blade when the nacelle and the blades are in the monitoring position. Alternatively, the monitoring can be carried out while the blades are still moving, preferably slowly moving, by e.g. taking photographs or videos of the blade surface.

In a further embodiment, the monitoring means is mobile meaning that it can move to one or more monitoring positions. In a preferred embodiment, the monitoring means is located inside the tower or the nacelle so that it is protected from environmental influences. In order to monitor the blade surface condition the monitoring means can move out of its inside position to one or more outside positions from which monitoring of the blade can take place.

In a further preferred embodiment, the wind turbine comprises moving means for moving the monitoring means. For this purpose, the monitoring means is mounted on the moving means. In a preferable embodiment, the moving means extend along the length of the tower and/or around the tower. The monitoring means is mounted on the moving means, preferably mounted in such a way that the moving means face the blades. Preferably, the monitoring means is mounted on the moving means in a swivel-mounted or rotatable way. Moving means can comprise at least one rail comprising a motor and a carriage which can move the monitoring means along the rail. In the case of a rail, it is advantageous that the rail is not positioned on the tower at the height of the tips of the blades. In strong wind conditions, the blade could bend and touch the tower and therefore damage the monitoring means. The moving means can also comprise a cable arrangement with which the monitoring means can be moved by pulling cables accordingly. In another alternative embodiment, the moving means can comprise at least one arm, on which at least one monitoring means is arranged. Preferably, the arm is extendible and can move the mounted monitoring means to any desired position. In yet another embodiment of the invention, the moving means is a movable ring which can move along the tower and around the tower.

The movement of the monitoring means, in particular the position and the orientation, can preferably be controlled remotely. The moving means are preferably mounted on the nacelle and/or the tower of the wind turbine, in particular at the outside of the nacelle and/or tower. In a further embodiment, the moving means are arranged in such a way that the monitoring means can rotate around the longitudinal axis of the tower by means of the moving means. In another embodiment, one end of the moving means is located inside the tower or the nacelle, while the rest of the moving means extends to the outside. In this case, the monitoring means can be moved from a shielded inside resting position to one or more outside monitoring positions by means of the moving means.

According to the invention, the wind turbine blade comprises a blade pitch control, preferably a pitch bearing, for each blade which can rotate the blade around its longitudinal axis. Preferably, the blade which is to be monitored is aligned along the longitudinal direction of the tower by rotation of the hub. By rotating the blade around its longitudinal axis by means of the pitch control, not only the substantially one entire side of the blade can be monitored from its tip to its root end, but all sides of the blade are exposed to the monitoring means during a 360 degree rotation of the blade so that substantially the entire blade surface along its complete length can be monitored. Preferably, at least 80 percent, in particular at least 90 percent of the entire blade surface can be monitored. In this context, "circumferential direction" means the direction of rotation around the longitudinal axis of the blade. Preferably, not only substantially the entire blade surface but the entire surface condition can be monitored.

Preferably, the wind turbine further comprises a condition monitoring system (CMS) for monitoring the surface condition of a wind turbine blade of a wind turbine. A condition monitoring system is a predictive maintenance system which monitors a parameter of condition in order to indicate a significant change before a failure of a component occurs. According to the invention, the wind turbine comprises a tower, a nacelle and at least one blade which is to be monitored by monitoring means, said blade comprising a tip end and a root end. The monitoring means is adapted to monitor the surface condition of at least substantially one entire side of the blade from its tip end to its root end. The CMS is adapted to process the monitoring data from the monitoring means in order to assess the surface condition of the blade of a wind turbine. Monitoring means can preferably be optical recording means, such as photo or video cameras or means for transmitting and receiving acoustic waves, such as an acoustic sensor preferably for ultrasound. In a further embodiment of the invention, the monitoring means comprises at least one camera and/or at least one acoustic sensor. Monitoring data is the data recorded by the monitoring means and transmitted to the CMS and can comprise images, videos, acoustic waves or any other kind of data which can be recorded by the monitoring means.

Preferably, the condition monitoring system is adapted to process images of substantially the entire blade surface from various directions. Those various directions are based on the positions of the either fixedly or movingly installed monitoring means. In another preferred embodiment, the monitoring means comprises an array of microphones and the condition monitoring system is adapted to process data from an array of the microphones to detect the level, the type and/or the occurring place of noise generated by the wind turbine during its operation.

In a preferred embodiment, the CMS compares the received and/or processed data of the monitoring means with reference data. Reference data can be any previously set values or stored past monitoring data. By comparison of the data the CMS identifies surface changes of the blade, such as damages as well as their extent and their position. In an alternative embodiment, a remote user can evaluate the monitoring data. For this purpose, the monitoring data is preferably sent to a monitoring station. In a further preferable embodiment, the monitoring can be carried out in real time.

In another aspect of the invention, a method for monitoring the surface condition of at least substantially one entire side of a blade of a wind turbine is provided. In a first step, the surface condition of substantially one entire side is monitored by monitoring means. The monitoring data is transmitted to a condition monitoring system which then processes the data in order to identify any condition changes of the blade surface. The data transmission can be done by cable or wireless.

The monitoring means moves by means of moving means along the longitudinal direction of the tower to monitor the surface condition of at least substantially one entire side of the blade from its tip to its root end after aligning the blade along the longitudinal direction of the tower. Before moving the monitoring means along the longitudinal direction of the tower, the monitoring means can preferably be moved around the tower along its circumferential direction in order to position the monitoring means in accordance with the position of the nacelle and therefore the position of the blade.

The at least one blade is rotated by means of a pitch control system around its longitudinal axis. In this way, the blade surface condition along the circumferential direction of the blade along the substantially its complete length, therefore the condition of substantially the entire blade surface, can be monitored.

In a further preferred embodiment the monitoring means is connected to a lightning detection system. Consequently, the monitoring system can monitor the blade surface condition right after a stroke of lightning into the blade.

### [Brief Description of Drawings]

The invention will be described below with reference to the following figures which show in schematic representation
[Fig. 1]

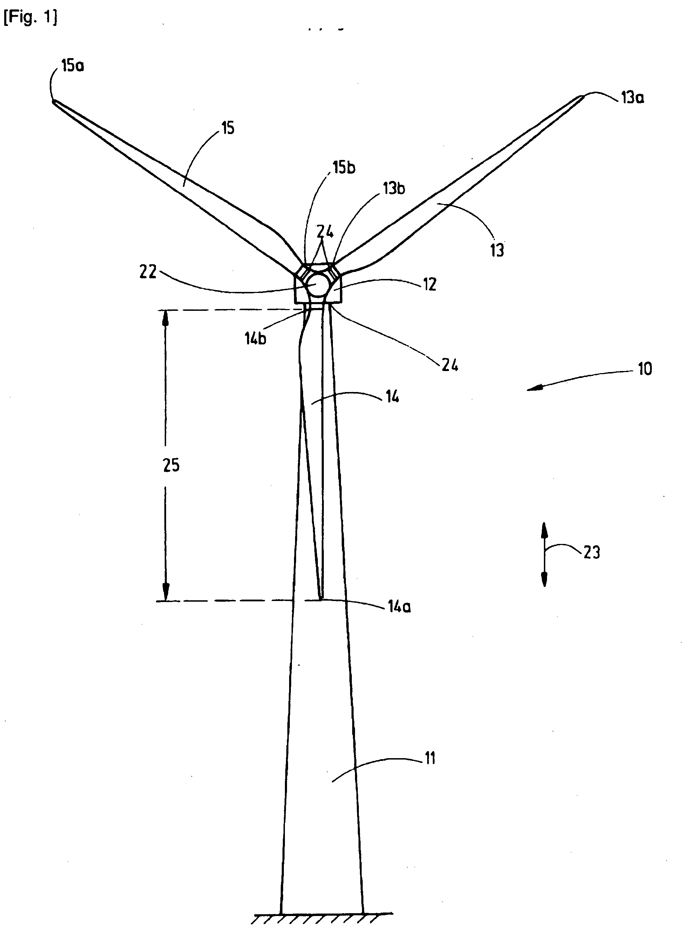

   Figure 1 is a front view of a wind turbine;
[Fig. 4]

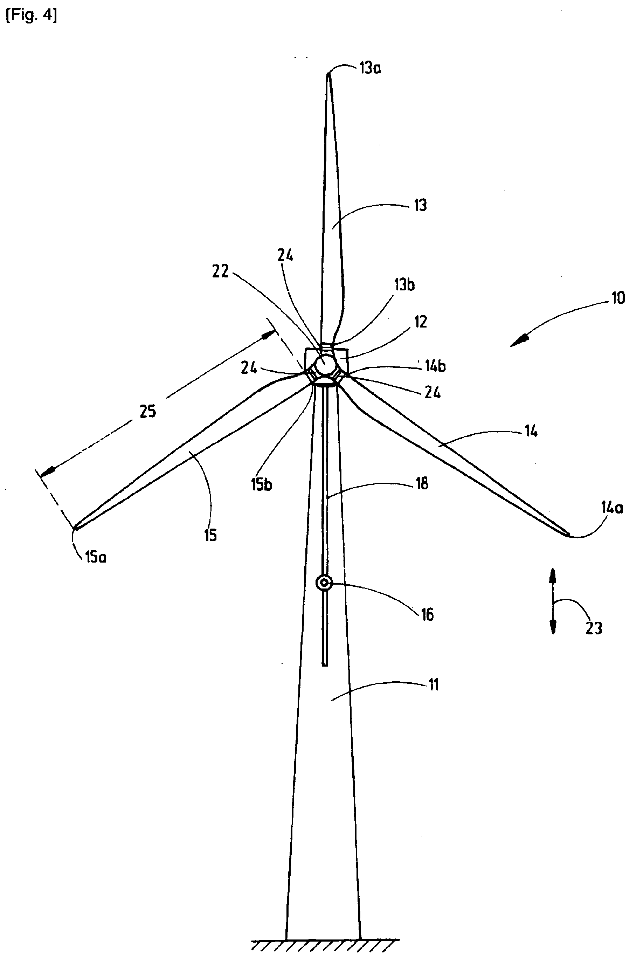

   Figure 4 is a front view of a wind turbine with monitoring means mounted on a rail;
[Fig. 5]

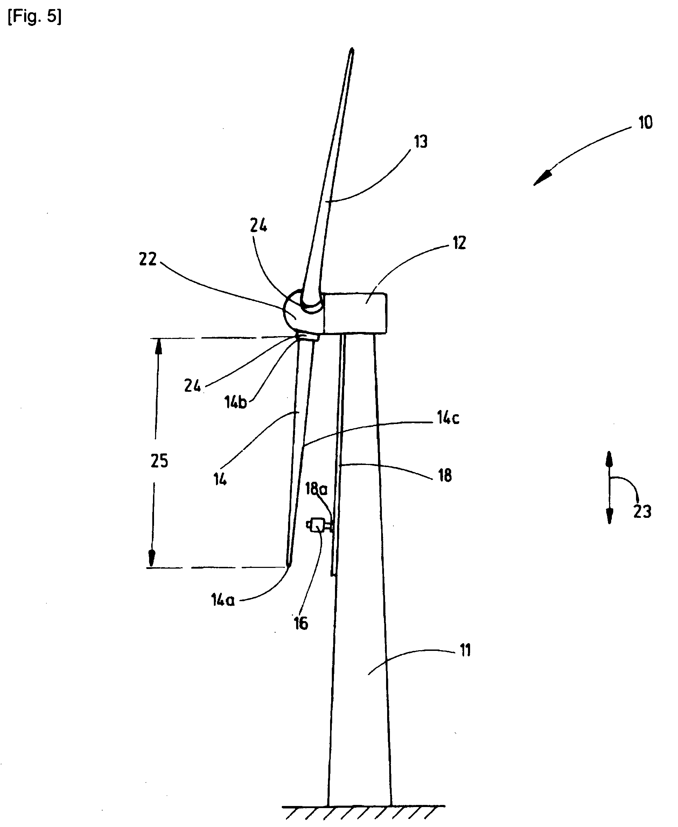

   Figure 5 is a side view of the wind turbine of figure 4;
[Fig. 6]

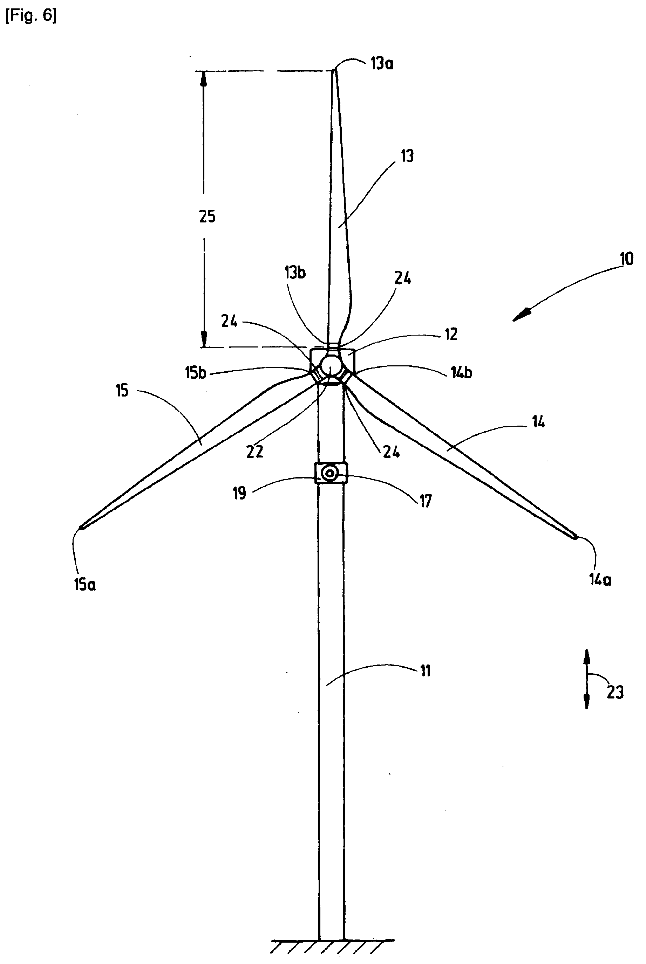

   Figure 6 is a front view of a wind turbine with monitoring means mounted on a movable ring;
[Fig. 7]

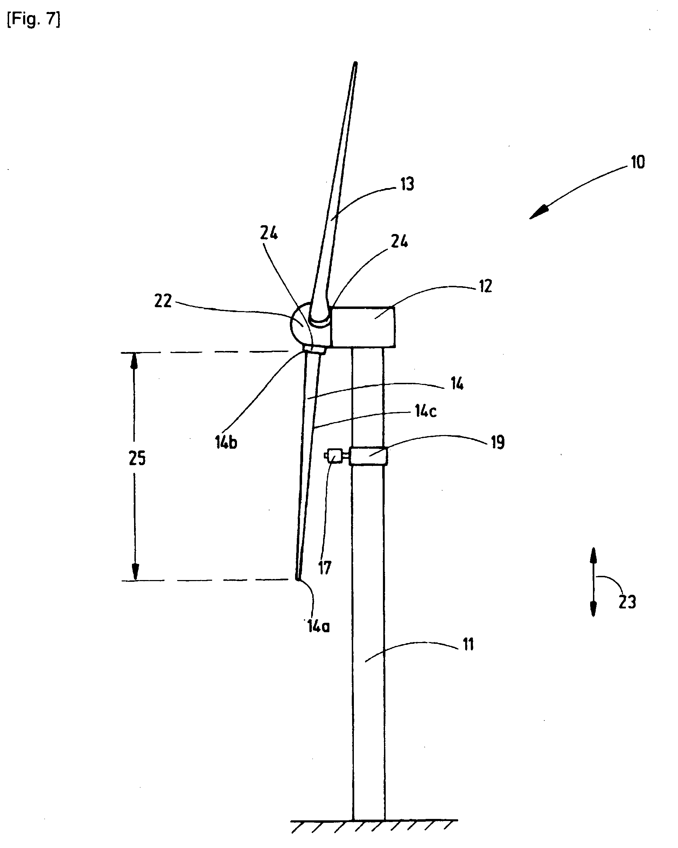

   Figure 7 is a side view of the wind turbine of figure 6;
[Fig. 8]

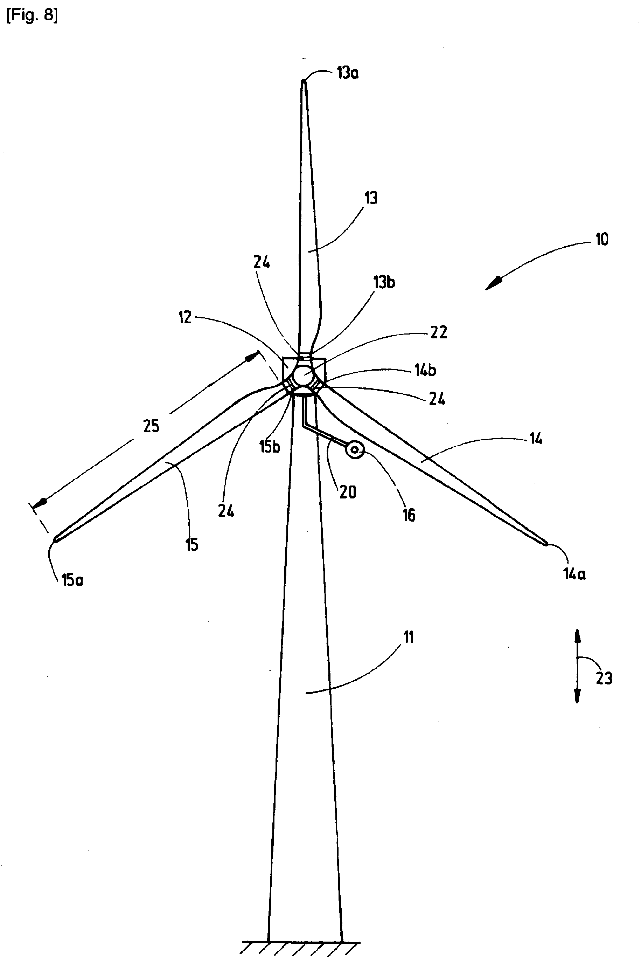

   Figure 8 is a front view of a wind turbine with monitoring means mounted on an extendible arm; and
[Fig. 9]

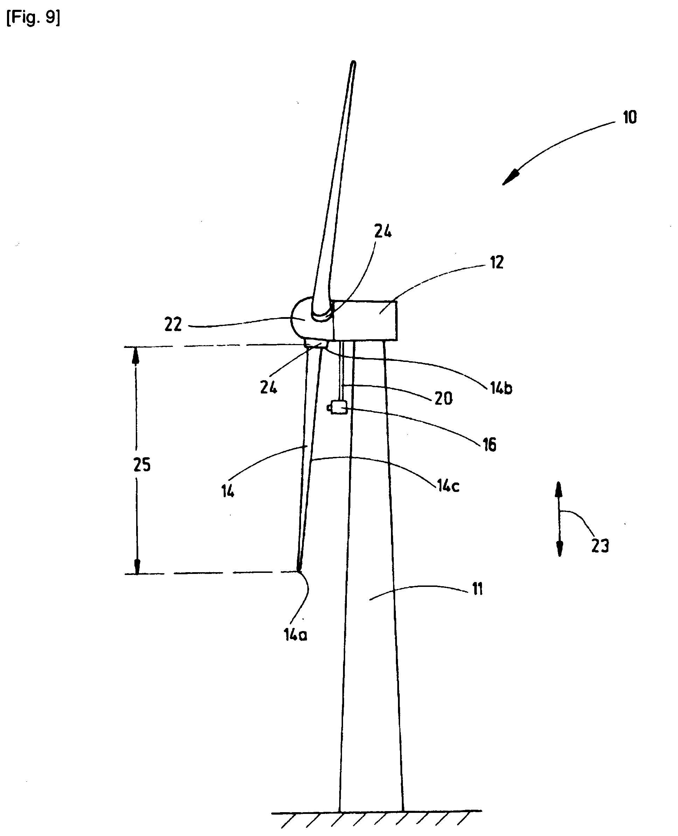

   Figure 9 is a side view of the wind turbine of figure 8.

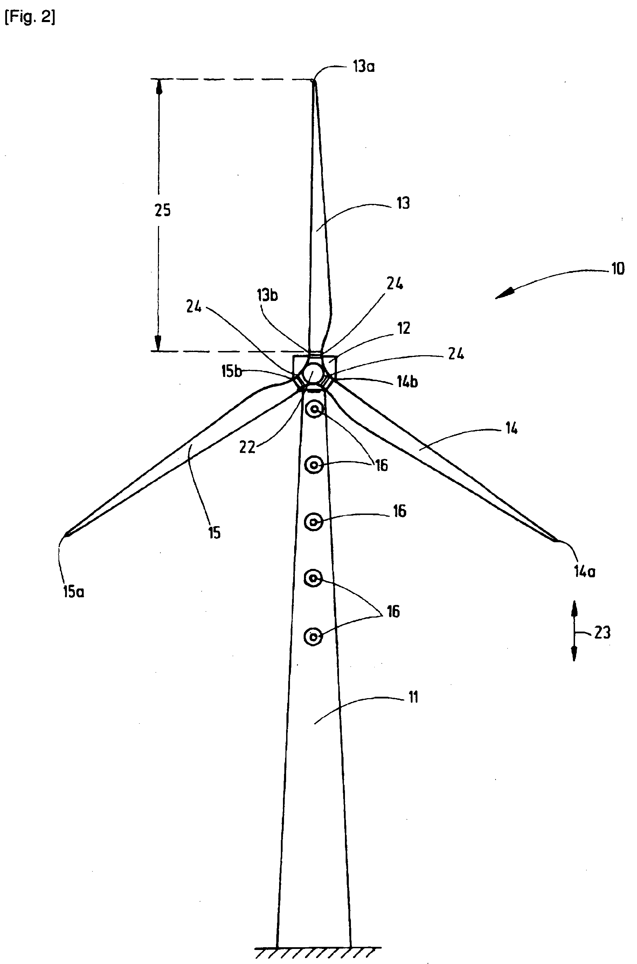

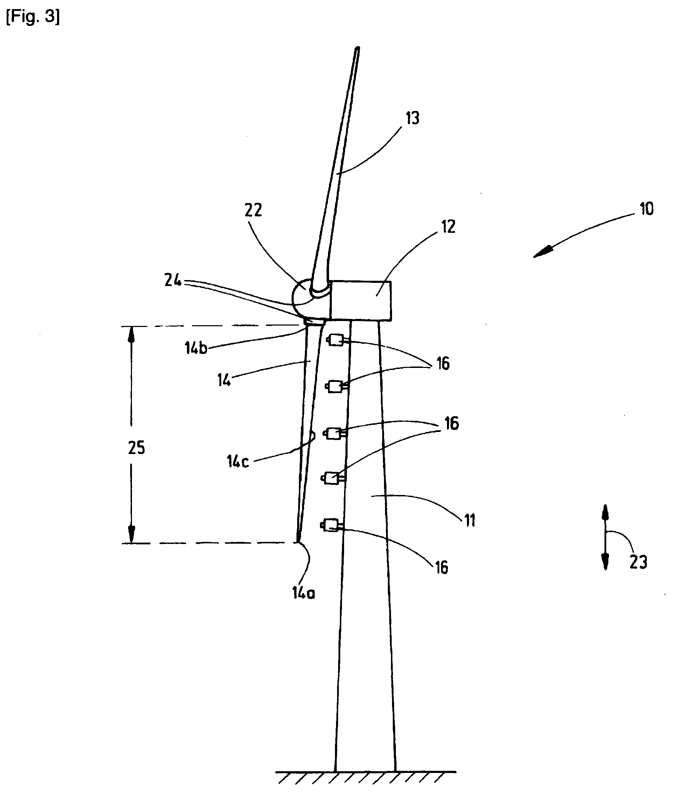

Figures 2 and 3 are not part of the present invention.

### [Description of Embodiments]

Figure 1 shows a front view of a wind turbine 10 comprising a vertical tower 11, a nacelle 12 rotatably mounted atop of the tower 11 and three wind turbine blades 13, 14, 15. The wind turbine blades 13, 14, 15 comprise a tip end 13a, 14a, 15a and a root end 13b, 14b, 15b respectively, defining a length 25 of the equally sized blades 13, 14, 15. The wind turbine blades 13, 14, 15 are mounted to a hub 22 via pitch bearings 24 respectively, said pitch bearings 24 allow for the rotation of the blades 13, 14, 15 around their longitudinal axis. The hub 22 is rotatably arranged at the nacelle 12. In figure 1 a possible monitoring position of the surface condition of the blade 14 is shown. For this purpose, the hub 22 is arranged in such a rotational position that the blade 14 is aligned substantially parallel to the longitudinal direction 23 of the tower 11. Furthermore, the nacelle 12 is rotated around the longitudinal axis of the tower 11 in such a way that the tower facing side 14c (see figures 3, 5, 7 and 9) of blade 14 faces monitoring means (see cameras 16 and acoustic sensor 17 in figures 4 to 9). In this position, the surface condition of the tower facing side 14c of blade 14 from its tip end 14a to its root end 14b can be monitored by monitoring means which can move along at least the longitudinal direction 23 of the tower 11 (see figures 4 to 9).

Figure 4 shows a front view of a wind turbine 10 with monitoring means and moving means of another embodiment of the present invention. The monitoring means is a camera 16 which is mounted on moving means. The moving means is a rail 18 which is mounted on the tower 11 and extends along its longitudinal direction 23 in an approximately straight line. The rail 18 extends from the upper end of the tower along a length which approximately corresponds to the length 25 of a wind turbine blade down towards the lower end of the tower. The rail 18 comprises a motor and a carriage 18a to which the camera 16 is mounted. By means of the motor and the carriage 18a (see figure 5) the camera 16 can be moved along the rail 18. The camera 16 can move along the rail 18 in such a way that an entire tower facing side 14c (see figure 5) of a blade 14 from its tip end 14a to its root end 14b can be monitored by means of just one camera 16, once the blade 14 is arranged substantially parallel to the longitudinal direction 23 of the tower 11 and one side 14c of the blade 14 faces the tower 11.

In Figure 5 a side view of the wind turbine 10 of figure 4 is shown. The hub 22 and the nacelle 12 are arranged in such rotational positions that the blade 14 is arranged substantially parallel to the longitudinal direction 23 of the tower 11 so that the tower facing side 14c of blade 14 faces the rail 18. The tower facing side 14c of blade 14 can be monitored by means of moving the camera 16 along the rail 18 from the tip end 14a to the root end 14b of the blade 14. The pitch bearing 24 on which the blade 14 is mounted allows the rotation of the blade 14 so that every side of the blade 14 can face the tower 11 and thus be monitored by the camera 16.

Figure 6 shows a front view of a wind turbine 10 with monitoring means and moving means of yet another embodiment of the present invention. The blades 13, 14, 15 are mounted to the hub 22 via pitch bearings 24. The monitoring means is an acoustic sensor 17 for ultrasound which comprises a receiver and a transmitter for ultrasound. The acoustic sensor 17 is mounted on a movable ring 19 functioning as moving means. The movable ring 19 can move along the longitudinal direction 23 of the tower 11 and around the tower 11 by means of a suitable drive. Once a blade 14 is arranged substantially parallel to the longitudinal direction 23 of the tower 11, the acoustic sensor 17 emits ultrasound onto the surface of the tower facing side 14c (see figure 7) of the blade 14. The return sound waves of the excited oscillations in the blade material are again received by the acoustic sensor 17. Since the ring 19 can also move around the tower 11, the acoustic sensor 17 can be moved along the circumferential direction 23 of the tower 11. Due to this, the acoustic sensor 17 can be positioned in such a way that it faces the tower facing side 14c of the blade 14 (see figure 7). Without the possibility of moving the monitoring means around the tower, the nacelle 12 would have to be rotated so that one side of the blade to be monitored faces the acoustic sensor 17.

Figure 7 is a side view of the wind turbine 10 of figure 6. The tower facing side 14c of blade 14 can be monitored by means of moving the acoustic sensor 17 along the tower 11 by means of the ring 19 from the tip end 14a to the root end 14b of the blade 14. By means of the pitch bearing 24, the blade 14 can be rotated around its longitudinal axis. Due to the rotation of the blade 14, each side of the blade 14 can be arranged such that it faces the tower 11 and therefore faces the acoustic sensor 17. As a result, each side of the blade 14 from the tip end 14a to the root end 14b of the blade 14, i.e. the entire blade surface, can be monitored by means of the acoustic sensor 17.

In Figure 8 a front view of a wind turbine 10 with monitoring means and moving means of yet another embodiment of the present invention is shown. A monitoring means in form of a camera 16 can be moved by means of an extendable arm 20 from a resting position inside the nacelle 12 to monitoring positions outside of the nacelle 12. For this purpose, the camera 16 is arranged at the free end of the extendible arm 20. The extendible arm is arranged at the nacelle in a swivel-mounted way. In addition, the extendible arm comprises a further swivel bearing along its length so that a further range for monitoring can be achieved. In order to monitor the surface condition of a blade 13, 14, 15 the extendible arm 20 moves the camera 16 along the length 25 of the blade 13, 14, 15 from its root end 13b, 14b, 15b to its tip end 13a, 14a, 15a so that an entire side of the blade along the length 25 of the blade can be monitored. Since the extendible arm 20 can move freely and is not restricted to only a movement along the longitudinal direction 23 of the tower 11, the blade 13, 14, 15 can be monitored without the need to position it according to the longitudinal direction 23 of the tower 11.

Figure 9 shows a side view of the wind turbine 10 of figure 8. By means of the extendible arm 20, the entire side 14c of the blade 14 can be monitored along its entire length 25 from the tip end 14a to the root end 14b of the blade 14. As the blade 14 is mounted to the hub 22 via a pitch bearing 24, the blade 14 can be pitched around its longitudinal axis in such a way that every side of the blade 14 can face the tower 11 and thus the cameras 16. Consequently, each side of the blade 14 can be monitored from its tip end 14a to its root end 14b so that the entire blade surface can be monitored.

## Claims

1. A wind turbine, comprising:
a tower (11),
a nacelle (12),
at least one blade (13, 14, 15) with a tip end (13a, 14a, 15a) and a root end (13b, 14b, 15b), and
monitoring means for monitoring the surface condition of the blade (13, 14, 15),
wherein said monitoring means is located at the tower (11) or at the nacelle, and
wherein said monitoring means is adapted to monitor the surface condition of at least substantially one entire side (14c) of the blade (13, 14, 15) from its tip end (13a, 14a, 14c) to its root end (13b, 14b, 15b),
wherein the wind turbine further comprises
a blade pitch control for rotating the at least one blade (13, 14, 15) around its longitudinal axis,
wherein the blade pitch control is adapted to rotate the at least one blade (13, 14, 15) for monitoring substantially the entire blade surface condition in the circumferential direction of the blade (13, 14, 15),
wherein the blade (13, 14, 15) is adapted to be aligned along the longitudinal direction (23) of the tower (11), wherein the monitoring means is adapted to be moved along the tower (11) to monitor the blade surface condition of at least substantially one entire side (14c) of the blade (13, 14, 15) from its tip end (13a, 14a, 15a) to its root end (13b, 14b, 15b), and wherein the monitoring means is adapted to be moved around the tower (11) along its circumferential direction according to the position of the blade (13, 14, 15).

2. The wind turbine according to claim 1,
wherein the monitoring means comprises optical recording means (16) or means (17) for transmitting and receiving acoustic waves.

3. The wind turbine according to claim 1,
wherein the monitoring means is mounted on moving means (18, 19, 20), said moving means (18, 19, 20) being mounted on the tower (11) or the nacelle (12).

4. The wind turbine according to claim 2,
wherein the optical recording means (16) comprise at least one wide-angle lens.

5. The wind turbine according to claim 2,
wherein the optical recording means (16) comprise a water-proof housing or cleaning means for the optical recording means (16).

6. The wind turbine (10) according to claim 1, further comprising a condition monitoring system for monitoring the surface condition of a wind turbine blade (13, 14, 15)of a wind turbine (10),
said condition monitoring system being adapted to process monitoring data from the monitoring means.

7. The wind turbine (10) according to claim 6, wherein the condition monitoring system is adapted to process images of substantially the entire blade surface.

8. The wind turbine (10) according to claim 6,
wherein the condition monitoring system is adapted to process images of substantially the entire blade surface from various directions based on the position of the monitoring means.

9. The wind turbine (10) according to claim 6, wherein the monitoring means comprises an array of microphones, and
wherein the condition monitoring system is adapted to process data from the array of the microphones to detect the level, the type and/or the occurring place of noise generated by the wind turbine.

10. The wind turbine (10) according to claim 6, wherein the condition monitoring system compares the processed monitoring data with reference data to identify changes of the blade surface condition.

11. A method for monitoring the surface condition of at least one blade (13, 14, 15) of a wind turbine (10) having a tower (11), comprising the steps of:
monitoring the surface condition of at least substantially one entire side (14c) of the blade (13, 14, 15) from its tip end (13a, 14a, 15a) to its root end (13b, 14b, 15b) using monitoring means, wherein the monitoring includes monitoring substantially the entire blade surface condition in the circumferential direction of the blade (13, 14, 15) by rotating the blade around its longitudinal axis by means of a pitch control system, and wherein the monitoring means is moved around the tower along its circumferential direction according to the position of the blade;
aligning the blade (13, 14, 15) along the longitudinal direction (23) of the tower (11);
moving the monitoring means along the tower (11) to monitor the blade surface condition of at least substantially one entire side (14c) of the blade (13, 14, 15) from its tip end (13a, 14a, 15a) to its root end (13b, 14b, 15b),
transmitting the monitoring data to a condition monitoring system, and processing of the monitoring data by the condition monitoring system in order to identify blade surface condition changes.

## Patentansprüche

1. Eine Windturbine, umfassend:
einen Turm (11),
eine Gondel (12),
mindestens ein Rotorblatt (13, 14, 15) mit einem Spitzen-Ende (13a, 14a, 15a) und einem Wurzelende (13b, 14b, 15b), und
einer Überwachungseinrichtung zum Überwachen des Oberflächenzustandes des Rotorblattes (13, 14, 15), wobei die Überwachungseinrichtung an dem Turm (11) oder an der Gondel angeordnet ist, und
wobei die Überwachungseinrichtung dazu angepasst ist, den Oberflächenzustand von zumindest im Wesentlichen einer gesamten Seite (14c) des Rotorblattes (13, 14, 15) von seinem Spitzen-Ende (13a, 14a, 14c) bis zu seinem Wurzelende (13b, 14b, 15b) zu überwachen,
wobei die Windturbine weiterhin umfasst:
eine Rotorblatt-Pitch-Regelung, um das mindestens eine Rotorblatt (13, 14, 15) um seine Längsachse zu drehen,
wobei die Rotorblatt-Pitch-Regelung dazu angepasst ist, das mindestens eine Rotorblatt (13, 14, 15) zu drehen, um im Wesentlichen den gesamten Oberflächenzustand des Rotorblatts in der Umfangsrichtung des Rotorblattes (13, 14, 15) zu überwachen,
wobei das Rotorblatt (13, 14, 15) dazu angepasst ist, entlang der Längsrichtung (23) des Turms (11) ausgerichtet zu werden, wobei die Überwachungseinrichtung dazu angepasst ist, entlang des Turms (11) bewegt zu werden, um den Oberflächenzustand des Rotorblatts mindestens im Wesentlichen einer gesamten Seite (14c) des Rotorblatts (13, 14, 15) von seinem Spitzen-Ende (13a, 14a, 15a) bis zu seinem Wurzelende (13b, 14b, 15b) zu überwachen, und wobei die Überwachungseinrichtung dazu angepasst ist, um in Umfangsrichtung um den Turm (11) herum bewegt zu werden, gemäß der Position des Rotorblattes (13, 14, 15)

2. Windturbine gemäß Anspruch 1, wobei die Überwachungseinrichtung eine optische Aufzeichnungseinrichtung (16) oder Mittel (17) zum Senden und Empfangen von Schallwellen umfasst.

3. Windturbine gemäß Anspruch 1, wobei die Überwachungseinrichtung auf beweglichen Einrichtungen (18, 19, 20) montiert ist, wobei die beweglichen Einrichtungen (18, 19, 20) auf dem Turm (11) oder der Gondel (12) montiert sind.

4. Windturbine gemäß Anspruch 2, wobei die optische Aufzeichnungseinrichtung (16) zumindest eine Weitwinkellinse umfasst.

5. Windturbine gemäß Anspruch 2, wobei die optische Aufzeichnungseinrichtung (16) ein wasserdichtes Gehäuse oder Reinigungsmittel für die optische Aufzeichnungseinrichtung (16) umfasst.

6. Windturbine (10) gemäß Anspruch 1, weiterhin umfassend
ein Zustandsüberwachungssystem zur Überwachung des Oberflächenzustands eines Rotorblatts (13, 14, 15) einer Windturbine (10),
wobei das Zustandsüberwachungssystem dazu angepasst ist, Überwachungsdaten von der Überwachungseinrichtung zu verarbeiten.

7. Windturbine (10) gemäß Anspruch 6, wobei das Zustandsüberwachungssystem dazu angepasst ist, Bilder von im Wesentlichen der gesamten Rotorblattoberfläche zu verarbeiten.

8. Windturbine (10) gemäß Anspruch 6, wobei das Zustandsüberwachungssystem dazu angepasst ist, um Bilder von im Wesentlichen der gesamten Rotorblattoberfläche aus verschiedenen Richtungen zu verarbeiten, je nach Position der Überwachungseinrichtung.

9. Windturbine (10) gemäß Anspruch 6, wobei das Zustandsüberwachungssystem eine Reihe von Mikrofonen umfasst, und wobei das Zustandsüberwachungssystem dazu angepasst ist, Daten aus der Reihe der Mikrofone zu verarbeiten, um den Pegel, die Art und/oder den Herkunftsort des durch die Windturbine erzeugten Geräusches zu ermitteln.

10. Windturbine (10) gemäß Anspruch 6, wobei das Zustandsüberwachungssystem die verarbeiteten Messdaten mit Referenzdaten vergleicht, um Änderungen des Oberflächenzustands des Rotorblatts zu identifizieren.

11. Verfahren zur Überwachung des Oberflächenzustands von mindestens einem Rotorblatt (13, 14, 15) einer Windturbine (10) mit einem Turm (11), umfassend die folgenden Schritte:
Überwachen des Oberflächenzustands mindestens im Wesentlichen einer gesamten Seite (14c) des Rotorblatts (13, 14, 15) von seinem Spitzen-Ende (13a, 14a, 15a) bis zu seinem Wurzelende (13b, 14b, 15b) durch die Verwendung einer Überwachungseinrichtung, wobei die Überwachung eine Überwachung von im Wesentlichen des gesamten Oberflächenzustandes des Rotorblatts in Umfangsrichtung des Rotorblatts (13, 14, 15) durch Drehung des Rotorblatts entlang seiner Längsachse durch ein Pitch-Regelungssystem beinhaltet, und wobei die Überwachungseinrichtung entlang ihrer Umfangsrichtung rund um den Turm bewegt wird, je nach Position des Rotorblatts;
Ausrichten des Rotorblatts (13, 14, 15) entlang der Längsachse (23) des Turms (11);
Bewegen der Überwachungseinrichtung entlang des Turms (11), um den Oberflächenzustand des Rotorblatts von mindestens im Wesentlichen einer gesamten Seite (14c) des Rotorblatts (13, 14, 15) von seinem Spitzen-Ende (13a, 14a, 15a) bis zu seinem Wurzelende (13b, 14b, 15b) zu überwachen,
Übertragen der Messdaten an ein Zustandsüberwachungssystem, und Verarbeitung der Messdaten durch das Zustandsüberwachungssystem, um Änderungen des Oberflächenzustands des Rotorblatts zu identifizieren.

## Revendications

1. Éolienne, comprenant :
une tour (11) ;
une nacelle (12) ;
au moins une aube (13, 14, 15) avec une extrémité d'embout (13a, 14a, 15a) et une extrémité de racine (13b, 14b, 15b) ; et
des moyens de surveillance pour surveiller l'état de surface de l'aube (13, 14, 15), lesdits moyens de surveillance étant positionnés au niveau de la tour (11) ou au niveau de la nacelle ; et
lesdits moyens de surveillance étant conçus pour surveiller l'état de surface d'au moins sensiblement un côté entier (14c) de l'aube (13, 14, 15) en partant de son extrémité d'embout (13a, 14a, 14c) jusqu'à son extrémité de racine (13b, 14b, 15b) ;
l'éolienne comprenant en outre :
une commande de pas d'aube pour faire pivoter l'au moins une aube (13, 14, 15) autour de son axe longitudinal ;
la commande de pas d'aube étant conçue pour faire tourner l'au moins une aube (13, 14, 15) pour surveiller sensiblement l'état de surface de l'ensemble de l'aube dans la direction circonférentielle de l'aube (13, 14, 15) ;
l'aube (13, 14, 15) étant conçue pour être alignée le long de la direction longitudinale (23) de la tour (11), les moyens de surveillance étant conçus pour être déplacés le long de la tour (11) pour surveiller l'état de surface de l'aube d'au moins sensiblement un côté entier (14c) de l'aube (13, 14, 15) en partant de son extrémité d'embout (13a, 14a, 15a) jusqu'à son extrémité de racine (13b, 14b, 15b), et les moyens de surveillance étant conçus pour être déplacés autour de la tour (11) le long de sa direction circonférentielle en fonction de la position de l'aube (13, 14, 15).

2. Éolienne selon la revendication 1, dans laquelle les moyens de surveillance comprennent des moyens d'enregistrement (16) optiques ou des moyens (17) pour transmettre et recevoir des ondes acoustiques.

3. Éolienne selon la revendication 1, dans laquelle les moyens de surveillance sont fixés sur des moyens de déplacement (18, 19, 20), lesdits moyens de déplacement (18, 19, 20) étant fixés sur la tour (11) ou la nacelle (12).

4. Éolienne selon la revendication 2, dans laquelle les moyens d'enregistrement (16) optique comprennent au moins une lentille à grand angle.

5. Éolienne selon la revendication 2, dans laquelle les moyens d'enregistrement (16) optique comprennent un carter étanche à l'eau ou des moyens de nettoyage pour les moyens d'enregistrement (16) optique.

6. Éolienne (10) selon la revendication 1, comprenant en outre un système de surveillance d'état pour surveiller l'état de surface d'une aube d'éolienne (13, 14, 15) d'une éolienne (10), ledit système de surveillance d'état étant conçu pour traiter les données de surveillance provenant des moyens de surveillance.

7. Éolienne (10) selon la revendication 6, dans laquelle le système de surveillance d'état est conçu pour traiter les images de sensiblement l'ensemble de la surface d'aube.

8. Éolienne (10) selon la revendication 6, dans laquelle le système de surveillance d'état est conçu pour traiter les images de sensiblement l'ensemble de la surface d'aube à partir de diverses directions sur la base de la position des moyens de surveillance.

9. Éolienne (10) selon la revendication 6, dans laquelle les moyens de surveillance comprennent une batterie de microphones et dans laquelle le système de surveillance d'état est conçu pour traiter les données provenant de la batterie de microphones pour détecter le niveau, le type et/ou l'emplacement de survenue du bruit généré par l'éolienne.

10. Éolienne (10) selon la revendication 6, dans laquelle le système de surveillance d'état compare les données de surveillance traitées aux données de référence pour identifier les changements d'état de surface de l'aube.

11. Procédé de surveillance de l'état de surface d'au moins une aube (13, 14, 15) d'une éolienne (10) ayant une tour (11), comprenant les étapes consistant à :
surveiller l'état de surface d'au moins sensiblement un côté entier (14c) de l'aube (13, 14, 15) en partant de son extrémité d'embout (13a, 14a, 15a) jusqu'à son extrémité de racine (13b, 14b, 15b) à l'aide de moyens de surveillance, la surveillance comprenant la surveillance de l'état de surface de sensiblement la totalité de l'aube dans la direction circonférentielle de l'aube (13, 14, 15) en faisant tourner l'aube autour de son axe longitudinal au moyen d'un système de commande de pas et les moyens de surveillance étant déplacés autour de la tour le long de sa direction circonférentielle en fonction de la position de l'aube ;
aligner l'aube (13, 14, 15) le long de la direction longitudinale (23) de la tour (11) ;
déplacer les moyens de surveillance le long de la tour (11) pour surveiller l'état de surface de l'aube d'au moins sensiblement un côté entier (14c) de l'aube (13, 14, 15) en partant de son extrémité d'embout (13a, 14a, 15a) jusqu'à son extrémité de racine (13b, 14b, 15b) ;
transmettre les données de surveillance à un système de surveillance d'état et traiter les données de surveillance par le biais du système de surveillance d'état afin d'identifier les changements d'état de surface de l'aube.
